Europäisches Patentamt

**European Patent Office**

Office européen des brevets

(11) Veröffentlichungsnummer **0 002 727 B1**

(12) **EUROPÄISCHE PATENTSCHRIFT**

(45) Veröffentlichungstag der Patentschrift. 02.09.81

(51) Int Cl³ **B 01 D 33/00, C 02 F 1/00**

(21) Anmeldenummer **78101661.3**

(22) Anmeldetag **13.12.78**

(54) Verfahren und Vorrichtung zum kontinuierlichen Filtrieren von Flüssigkeiten.

(30) Priorität **22.12.77 DE 2757209**

(43) Veröffentlichungstag der Anmeldung **11.07.79 Patentblatt 79/14**

(45) Bekanntmachung des Hinweises auf die Patenterteilung **02.09.81 Patentblatt 81/35**

(84) Benannte Vertragsstaaten **BE FR GB IT NL SE**

(56) Entgegenhaltungen
**DE-A-2 126 631**
**FR-A-1 438 301**
**US-A-3 150 063**
**US-D-B 492 716**

(73) Patentinhaber **Perc S.r.l., Via defendente ferrari 11, I-10036 Settimo Torinese (IT)**

(72) Erfinder **Schade, Horst, Ing.-grad., Fürstinstrasse 14, D-4300 Essen 14 (DE)**

(74) Vertreter **Radt, Wilhelm Peter, Dr. et al, Patentanwälte Radt, Finkener, Ernesti Heinrich-König-Strasse 119, D-4630 Bochum 1 (DE)**

Verfahren und Vorrichtung zum kontinuierlichen Filtrieren von Flüssigkeiten

Die Erfindung betrifft ein Verfahren zum kontinuierlichen Filtrieren von Flüssigkeiten, insbesondere zum Reinigen von Flüssigkeiten wie beispielsweise Abwässer oder dergleichen, bei dem die Flüssigkeit durch ein in Bewegung befindliches Bett aus teilchenförmigem oder körnigem Filtermaterial, beispielsweise Sand, geleitet wird, wobei die zu filternde Flüssigkeit durch ein nach unten fließendes Bett aus Filtermaterial von unten beginnend an nach oben aufeinanderfolgenden Stellen (Stufen) quer zur Fließrichtung des Filtermaterials abwechselnd von der einen zur anderen Seite durch das Bett geführt wird.

Die bisher angewendeten und bekanntgewordenen Verfahren bzw. Anlagen zum kontinuierlichen Filtrieren von Flüssigkeiten sind aus verschiedenen Gründen noch nicht zufriedenstellend. Voraussetzung für einen einwandfreien Betrieb eines kontinuierlichen Filterprozesses ist ein gleichmäßiges Fließen des aus körnigem Filtermaterial bestehenden Bettes. Hauptprobleme, die zu Schwierigkeiten führen, sind hierbei in erster Linie Unregelmäßigkeiten in der Fließbewegung, das Entstehen von bevorzugten Fließströmen und unerwünschte Brückenbildungen an Engstellen, die leicht zu Verstopfungen führen können. Die bekannten Verfahren arbeiten im allgemeinen nach dem Prinzip des Gegenstromes, d. h. die zu reinigende Flüssigkeit fließt von unten nach oben, während das Bett aus Filtermaterial wegen des höheren spezifischen Gewichtes sich in entgegengesetzter Richtung, also von oben nach unten, bewegt.

Aus der DE-A 2 434 968 ist ein Verfahren zum Filtrieren einer Flüssigkeit bekanntgeworden, bei dem innerhalb eines Gefäßes ein in Bewegung befindliches Bett aus Teilchenmaterial geschaffen wird, welches teilweise eine freie, geneigte Oberfläche hat und bei dem die zu filternde Flüssigkeit durch die geneigte Oberfläche in das Bett eingeleitet wird. Das am unteren Ende des Bettes abgezogene Material wird gewaschen und dem in Bewegung befindlichen Bett von oben wieder zugeführt. Auch bei diesem Verfahren ist innerhalb des Bettes wegen seiner relativ großen Breite und der unterschiedlichen Abmessungen quer zur Hauptbewegungsrichtung mit bevorzugten Strömungsbahnen und folglich mit Unregelmäßigkeiten zu rechnen.

Die US-A 3 150 063 betrifft eine Vorrichtung, in der ein fein zerteilter Feststoff, der eine senkrecht stehende Säule von oben nach unten durchläuft, mit einer Flüssigkeit in Kontakt gebracht wird, die längs eines zickzackförmigen Strömungsweges von unten nach oben durch das Feststoffbett geleitet wird, wobei sie dieses abwechselnd in beiden Richtungen durchströmt.

Gegenstand der DE-A 2 126 631 ist ein Verfahren zur kontinuierlichen Filtration von Flüssigkeiten mittels eines aus einzelnen Filterteilchen bestehenden kontinuierlichen bewegten Filterbettes, bei dem die zu behandelnde Flüssigkeit entweder in zentripetaler oder in zentrifugaler Richtung durch einen Ringraum geleitet wird, in dem das Filtermaterial absinkt. Der Filterraum, in dem sich das Filtermaterial befindet, ist von den Wandungen des Ringraumes, in den die Flüssigkeit eingeführt und aus dem sie wieder abgezogen wird, durch eine Jalousie oder eine siebartige Wand getrennt.

Der Erfindung liegt die Aufgabe zugrunde, ein verbessertes Verfahren zum kontinuierlichen Filtrieren von Flüssigkeiten zu entwickeln, bei dem nicht nur die Nachteile der bekannten Verfahren vermieden werden, sondern außerdem mit einem relativ geringen apparativen Aufwand eine erhebliche Steigerung des Filtereffektes und der Leistung erzielt wird. Ferner ist die Erfindung auf die Schaffung einer geeigneten Vorrichtung zur Durchführung des neuen Verfahrens gerichtet.

Ausgehend von einem Verfahren der eingangs beschriebenen Art besteht die Erfindung darin, daß das Bett aus Filtermaterial in einem aufrechtstehenden zylindrischen Ringraum aufrechterhalten wird, aus dem unten kontinuierlich auf hydraulische Weise Filtermaterial abgezogen und in das aufbereitetes Filtermaterial von oben wieder zugeführt wird, wobei die zu filternde Flüssigkeit von außen radial zur Mitte durch das Bett in den Innenraum eingeleitet und an einer höher gelegenen Stelle in entgegengesetzter Richtung radial nach außen wieder abgezogen und in dem Bett aus Filtermaterial eine der Fließbewegung entgegengerichtete Hydraulikströmung hervorgerufen wird, wobei die Menge des abgezogenen Filtermaterials durch Veränderung der Hydraulikströmung stufenlos geregelt werden kann.

Die Erfindung sieht ferner vor, daß das Filtermaterial im unteren Bereich des zylindrischen Ringraumes durch mechanische Einbauten in eine Drehbewegung versetzt wird.

Bei dem erfindungsgemäßen Verfahren bildet das Bett eine aufrechtstehende, vorzugsweise zylindrische Ringsäule auf der gesamten Höhe gleichbleibendem Querschnitt. Hierin liegt zunächst eine wesentliche Voraussetzung dafür, daß das in Bewegung befindliche Bett gleichmäßig und geschlossen abwärts fließt. Durch eine von unten eingeleitete Hydraulikströmung kann einerseits die Vergleichmäßigung des Filtermaterials weiter gefördert und vor allem die abgezogene Menge und damit auch die Fließgeschwindigkeit stufenlos geregelt werden. Ein weiterer wesentlicher Vorteil liegt darin, daß die zu filternde Flüssigkeit das Bett quer zu dessen Fließrichtung durchströmt, und zwar bei einem zweistufigen Verfahren zunächst radial von außen nach innen und anschließend radial von innen nach außen. Diese Verfahrensweise kann auch in mehr als zwei Stufen wiederholt werden.

Die vorgesehene Mehrstufigkeit des Verfahrens innerhalb eines Behälters bringt ferner den Vorteil mit sich, daß die ungereinigte Flüssigkeit in der ersten Stufe an einer unteren Stelle des Bettes eingeleitet wird und daß die bereits vorgereinigte Flüssigkeit an einer höhergelegenen Stelle erneut durch das Bett geleitet wird, wobei das an der höhergelegenen Stelle befindliche, noch frische Filtermaterial vornehmlich durch Adsorption eine intensive Feinfilterung bewirkt.

Bei einer Vorrichtung zum kontinuierlichen Filtrieren von Flüssigkeiten zur Durchführung des Verfahrens, die aus einem aufrechtstehenden ringzylindrischen Behälterabschnitt zur Aufnahme des Bettes aus Filtermaterial besteht, dessen freibleibender Innenraum oben und unten abgeschlossen ist, wobei die innere Zylinderwandung ebenso wie die in diesem Abschnitt befindliche Außenwand flüssigkeitsdurchlässig ist, besteht die Erfindung darin, daß die Außenwandung von wenigstens zwei axial übereinanderstehenden Ringmänteln umgeben ist, die jeder mit der Außenwandung eine Ringkammer bilden, von denen die untere Kammer im unteren Bereich einen Einlaßstutzen für die zu filternde Flüssigkeit und die obere Kammer im oberen Bereich einen entsprechenden Auslaßstutzen aufweist, und daß der ringzylindrische Behälter unten einen trichterförmigen Abschluß hat, an den sich ein Abzugsrohr anschließt, von dem eine Leitung zur Rückführung des Filtermaterials ausgeht, welches nach entsprechender Aufbereitung in einen oberhalb des ringzylindrischen Behälterabschnittes befindlichen Behälterkopf rückgeführt wird.

Nach einer Weiterbildung der Erfindung sind im unteren Bereich des Ringraumes an mehreren Stellen des Umfanges Einbauelemente mit radialen Leitflügeln angebracht. Der untere und obere Abschluß des Innenraumes hat vorzugsweise die Form eines Kegels mit nach außen gerichteter Spitze.

Nach einer anderen Weiterbildung der Erfindung hat das Abzugsrohr eine im Vergleich zu seinem Durchmesser relativ große Länge, wobei am unteren Ende ein Axialstutzen für die Einleitung von Flüssigkeit zur Erzeugung der regelbaren Hydraulikströmung und ein seitlich angebrachter Stutzen für den Abzug des Filtermaterials vorgesehen ist. Zur Förderung einer gleichmäßigen Strömung ist es vorteilhaft, wenn innerhalb des Abzugsrohres, vorzugsweise im oberen Bereich, axial verlaufende Leitrippen angeordnet sind.

Die Erfindung wird nachfolgend anhand eines zeichnerisch dargestellten Ausführungsbeispiels näher erläutert. Es zeigt in schematischer Form:

Fig. 1 einen Vertikalschnitt einer Vorrichtung zum kontinuierlichen Filtrieren von Flüssigkeiten,

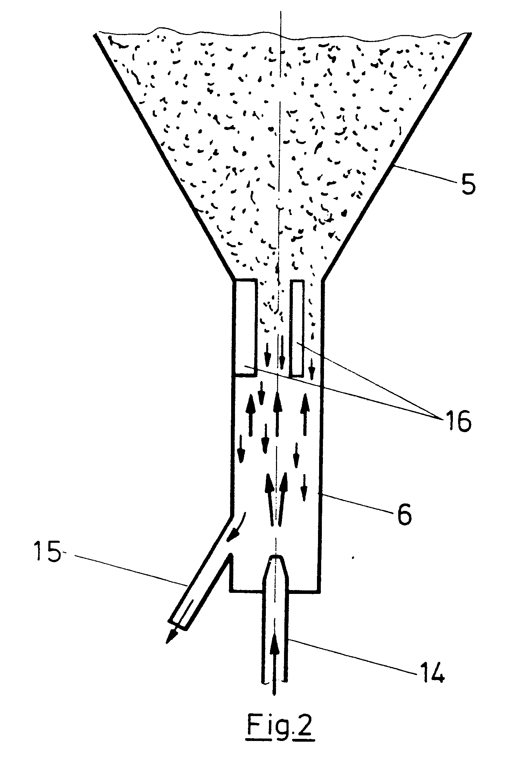

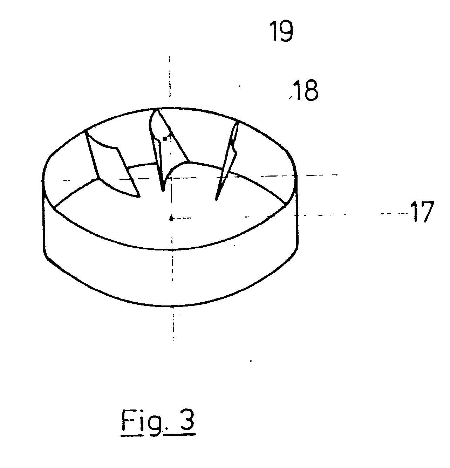

Fig. 2 in einem größeren Maßstab einen Vertikalschnitt des Abzugsrohres und

Fig. 3 eine schaubildliche Darstellung eines Einbaukörpers mit radial verlaufenden Rippen.

Die in der Zeichnung dargestellte Vorrichtung hat nach außen im wesentlichen die Gestalt eines aufrechtstehenden zylindrischen Behälters. Der obere Teil wird als Behälterkopf 1 bezeichnet, an den sich ein ringzylindrischer Behälterabschnitt 2 anschließt, der von einer Außenwandung 3 und einer Innenwandung 4 gebildet wird. Am unteren Ende des Behälters befindet sich ein trichterförmiger Abschluß 5, der an seiner Spitze in ein Abzugsrohr 6 übergeht.

Der ringzylindrische Behälterabschnitt 2 ist außen von zwei axial übereinanderstehenden Ringmänteln umgeben, die mit der Außenwandung 3 eine untere Ringkammer 7 und eine obere Ringkammer 8 bilden. An der Außenwandung der Ringkammer 7 ist im unteren Bereich ein Einlaßstutzen 9 angebracht. Demgegenüber befindet sich in der Wandung der Ringkammer 8 im oberen Bereich ein Auslaßstutzen 10.

Zur Schaffung eines abgeschlossenen Innenraumes 11 ist der aus der Innenwandung 4 bestehende Hohlzylinder unten und oben durch kegelförmige Abdeckungen 12, 13 abgeschlossen. Die Wandungen 3 und 4 des Ringraumes können beispielsweise aus gelochten Blechen bestehen, die mit Netzen bespannt sind, deren Maschen im Hinblick auf das verwendete Filtermaterial eine gewünschte Größe bzw. Weite haben.

Das Abzugsrohr 6 ist in axialer Richtung relativ langgestreckt ausgebildet und am Ende durch eine Platte abgeschlossen, in der ein Axialstutzen 14 für die Einleitung von Flüssigkeit zur Erzeugung einer regelbaren Hydraulikströmung angeordnet ist Der Abzug des Filtermaterials erfolgt durch einen seitlichen Stutzen 15. Am Anfang des Abzugsrohres 6 sind in der Achsrichtung sich erstreckende Leitrippen 16 angeordnet, die dazu beitragen sollen, schädigende Wirbel in der Strömung zu vermeiden.

Das Abzugsrohr 6 erfüllt einen doppelten Zweck: einerseits dient es dazu, das körnige Filtermaterial aus der Vorrichtung abzuziehen, und andererseits wird durch das Abzugsrohr 6 von unten ein Flüssigkeitsstrom zugeführt. Mit Hilfe dieses Flüssigkeitsstromes läßt sich das Fließen des körnigen Filtermaterials beeinflussen und regulieren.

In Fig. 3 ist eines der Einbauelemente 17 dargestellt, die zweckmäßigerweise im unteren Bereich des Ringraumes angeordnet werden. Ein solches Einbauelement besteht aus einem äußeren Ringband 18, an dessen Innenwandung Leitflügel 19 befestigt sind, die in dem abwärts fließenden Filtermaterial eine drehende Bewegungskomponente verursachen.

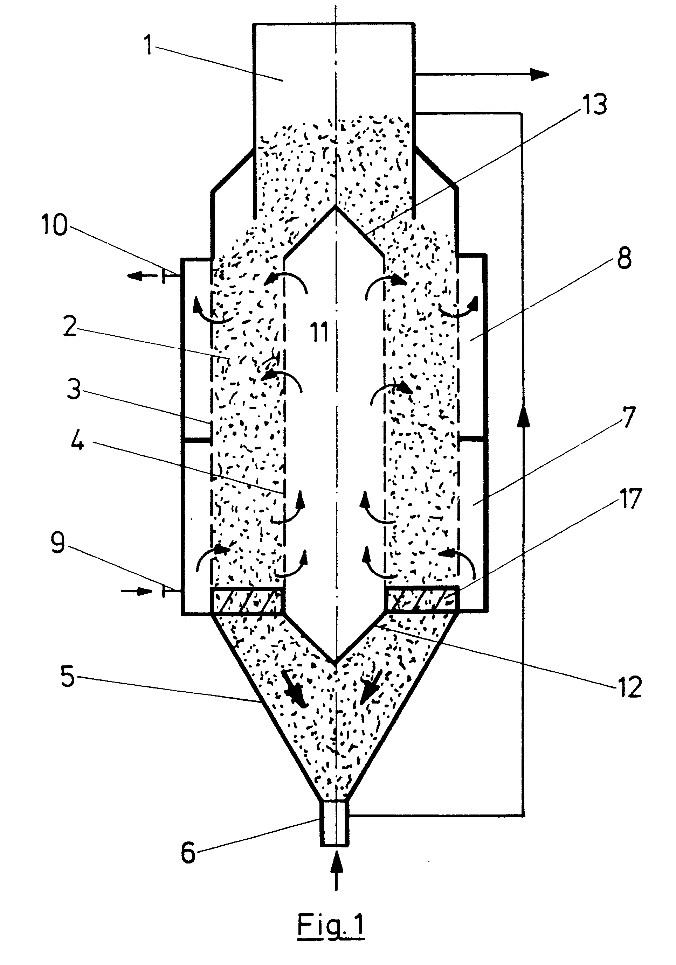

Die Funktionsweise der Vorrichtung nach Fig. 1 ist folgende:

Das körnige Filtermaterial, beispielsweise Sand, bewegt sich vom Behälterkopf 1 abwärts durch den anschließenden Ringraum 2, dessen Wandungen 3 und 4 flüssigkeitsdurchlässig sind, und von dort weiter zum Abzugsrohr 6. Durch den seitlichen Stutzen 15 wird das gesättigte Filtermaterial aus dem Abzugsrohr 6 abgezogen und nach entsprechender Aufbereitung mittels einer geeigneten Pumpenanlage in den Behälterkopf 1 rückgeführt. Das schlammhaltige Abwasser wird durch einen Stutzen aus dem Behälterkopf 1 abgezogen und in einem üblichen Rundeindicker oder einer Filterstation, beispielsweise einer Filterpresse oder dergleichen, vom mitgeführten Feststoff getrennt.

Die zu behandelnde Flüssigkeit tritt durch den Eingangsstutzen 9 in die untere Ringkammer 7, fließt von dort in Zentripetalrichtung durch das Bett aus körnigem Filtermaterial zum Innenraum 11, in welchem die Flüssigkeit nach oben aufsteigt, um von dort nunmehr in Zentrifugalrichtung erneut durch das Bett aus Filtermaterial in die Kammer 8 zu fließen, aus der sie die Vorrichtung durch den Austrittsstutzen 10 verläßt.

Mit Hilfe der Vorrichtung nach Fig. 1 kann auf diese Weise Flüssigkeit in zwei aufeinanderfolgenden Stufen kontinuierlich behandelt werden, wobei in der ersten Stufe im wesentlichen eine Filterung durch mechanische Trennung der in der Flüssigkeit enthaltenen Partikel stattfindet und in der zweiten Stufe überwiegend durch Adsorption die gelösten bzw. fein emulgierten Bestandteile abgetrennt werden. Es braucht nicht besonders betont zu werden, daß durch eine Hintereinanderschaltung von mehr als zwei Stufen, die in gleicher Weise wie die Stufen bei der Vorrichtung nach Fig. 1 ausgebildet sind, der Filter- bzw. Reinigungseffekt entsprechend gesteigert werden kann, falls dies erwünscht sein sollte.

## Patentansprüche

1. Verfahren zum kontinuierlichen Filtrieren von Flüssigkeiten, insbesondere zum Reinigen von Flüssigkeiten wie beispielsweise Abwässer oder dergleichen, bei dem die Flüssigkeit durch ein in Bewegung befindliches Bett aus teilchenförmigem oder körnigem Filtermaterial, beispielsweise Sand, geleitet wird, wobei die zu filternde Flüssigkeit durch ein nach unten fließendes Bett aus Filtermaterial von unten beginnend an nach oben aufeinanderfolgenden Stellen (Stufen) quer zur Fließrichtung des Filtermaterials abwechselnd von der einen zur anderen Seite durch das Bett geführt wird, dadurch gekennzeichnet, daß das Bett aus Filtermaterial in einem aufrechtstehenden zylindrischen Ringraum aufrechterhalten wird, aus dem unten kontinuierlich auf hydraulische Weise Filtermaterial abgezogen und in das aufbereitete Filtermaterial von oben wieder zugeführt wird, wobei die zu filternde Flüssigkeit von außen radial zur Mitte durch das Bett in den Innenraum eingeleitet und an einer höher gelegenen Stelle in entgegengesetzter Richtung radial nach außen wieder abgezogen und in dem Bett aus Filtermaterial eine der Fließbewegung entgegengesetzte Hydraulikströmung hervorgerufen wird.

2. Verfahren nach Anspruch 1, dadurch gekennzeichnet, daß die Menge des abgezogenen Filtermaterials durch Veränderung der Hydraulikströmung stufenlos geregelt wird.

3. Verfahren nach den Ansprüchen 1 und 2, dadurch gekennzeichnet, daß das Filtermaterial im unteren Bereich des zylindrischen Ringraumes durch mechanische Einbauten in eine Drehbewegung versetzt wird.

4. Vorrichtung zum kontinuierlichen Filtrieren von Flüssigkeiten zur Durchführung des Verfahrens nach den Ansprüchen 1 und 3, bestehend aus einem aufrechtstehenden ringzylindrischen Behälterabschnitt zur Aufnahme des Bettes aus Filtermaterials, dessen freibleibender Innenraum oben und unten abgeschlossen ist, wobei die innere Zylinderwandung ebenso wie die in diesem Abschnitt befindliche Außenwand flüssigkeitsdurchlässig ist, dadurch gekennzeichnet, daß die Außenwandung (3) von wenigstens zwei axial übereinanderstehenden Ringmänteln umgeben ist, die jeder mit der Außenwandung (3) eine Ringkammer (7, 8) bilden, von denen die untere Kammer (7) im unteren Bereich einen Einlaßstutzen (9) für die zu filternde Flüssigkeit und die obere Kammer (8) im oberen Bereich einen entsprechenden Auslaßstutzen (10) aufweist, und daß der ringzylindrische Behälter unten einen trichterförmigen Abschluß (5) hat, an den sich ein Abzugsrohr (6) anschließt, von dem eine Leitung zur Rückführung des Filtermaterials ausgeht, welches nach entsprechender Aufbereitung in einen oberhalb des ringzylindrischen Behälterabschnittes (2) befindlichen Behälterkopf (1) rückgeführt wird.

5. Vorrichtung nach Anspruch 4, dadurch gekennzeichnet, daß im unteren Bereich des Ringraumes an mehreren Stellen des Umfanges Einbauelemente (17) mit radialen Leitflügeln (19) angebracht sind.

6. Vorrichtung nach den Ansprüchen 4 und 5, dadurch gekennzeichnet, daß der untere und der obere Abschluß (12, 13) des Innenraumes (11) die Form eines Kegels mit nach außen gerichteter Spitze hat.

7. Vorrichtung nach den Ansprüchen 4 bis 6, dadurch gekennzeichnet, daß das Abzugsrohr (6) eine im Vergleich zu seinem Durchmesser relativ große Länge hat und am untere Ende einen axialen Stutzen (14) für die Einleitung von Flüssigkeit zur Erzeugung der regelbaren Hydraulikströmung sowie einen seitlich angebrachten Stutzen (15) für den Abzug des Filtermaterials aufweist.

8. Vorrichtung nach Anspruch 7, dadurch gekennzeichnet, daß innerhalb des Abzugsrohres (6), vorzugsweise im oberen Bereich, axial verlaufende Leitrippen (16) angeordnet sind.

## Claims

1. A process für the continuous filtration of liquids, more particularly for the purification of liquids, e. g. effluents or the like, in which the liquid is taken through a bed of particulate or granular filter material, e. g. sand, in motion, the liquid for filtration being passed through a downwardly flowing bed of filter material, starting from the bottom to succesive places (stages) at the top, transversely of the direction of flow of the filter material, said liquid passing from one side of the bed to the other alternately, characterised in that the bed of filter material ist maintained in an upright cylindrical annular chamber from which filter material is continuously withdrawn hydraulically at the bottom and into which prepared filter material ist recycled from above, the liquid for filtration being introduced into the interior through the bed from the outside radially to the centre and being withdrawn radially outwards in the opposite direction at a higner place, an a hydraulic flow directed in opposition to the flow movement is produced in the bed of filter material

2. A process according to claim 1, characterised in that the amount of filter material withdrawn is steplessly regulated by varying the hydraulic flow.

3. A process according to claims 1 and 2, characterised in that the filter material is set into a rotary motion in the bottom zone of the cylindrical annular chamber by mechanical internal fittings.

4. Apparatus for the continuous filtration of liquids for performing the process according to claims 1 and 3, consisting of an upright annular cylindrical container portion to receive the bed of filter material, the unoccupied interoir of which is closed at the top an bottom, the inner cylinder wall, together with the outer wall in said portion, being permeable to liquid, characterized in that the outer wall (3) is surrounded by at least two axially superposed annular casings, each forming an annular chamber (7, 8) with the outer wall (3), the bottom chamber (7) having an inlet spigot (9) in the bottom zone for the liquid for filtration while the top chamber (8) has a corresponding outlet spigot (10) in the top zone, and the annular cylindrical container has a funnel-shaped outlet (5) at the bottom, to which which an outlet pipe (6) is connected, from which a filter material recycling pipe leads, said filter material being recycled to a container head (1) above the annular cylindrical portion (2) after appropriate treatment.

5. Apparatus according to claim 4, characterised in that internal fittings (17) with radial baffles (19) are provided in the bottom zone of the annular chamber at a number points on the periphery.

6. Apparatus according to claims 4 and 5, characterised in that the bottom and top ends (12, 13) of the interior (11) have the shape of a cone with an outwardly directed apex.

7. Apparatus according to claims 4 to 6, characterised in that the outlet pipe (6) is relatively long in comparison with its diameter and its bottom end has an axial spigot (14) for the introduction of liquid to produce the regulatable hydraulic flow, and a laterally disposed spigot (15) for the withdrawal of the filter material.

8. Apparatus according to claim 7, characterised in that axially extending guide ribs (16) are provided inside the outlet pipe (6), preferably in the top zone.

## Revendications

1. Procédé permettant la filtration continue de liquides, en particulier l'épuration de liquides tels que, par exemple, les eaux usées ou liquides analogues, dans lequel le liquide traverse un lit ou couche de matière filtrante en mouvement constituée de particules ou de grains, par exemple du sable, le liquide à filtrer étant dirigé à travers une couche de matière filtrante s'écoulant vers le bas, en commençant par le bas, en des zones (étages) se succédant vers le haut, perpendiculairement à la direction d'écoulement de ladite matière filtrante et alternativement, d'un côté à l'autre de ladite couche, procédé caractérisé par le fait que ladite couche de matière filtrante est conservée dans un espace cylindrique annulaire droit disposé verticalement, hors de la région inférieure duquel de la matière filtrante est de façon continue extraite hydrauliquement, et dans lequel de la matière filtrante préparée est réintroduite par en haut, ledit liquide à filtrer étant introduit radialement de l'extérieur vers le centre de l'espace interne, à travers ladite couche, puis extrait à nouveau, radialement vers l'extérieur, dans la direction opposée et en une zone supérieure, et par le fait qu'une circulation hydraulique est provoquée dans ladite couche de matière filtrante, dans une direction opposée à celle de l'écoulement.

2. Procédé selon la revendication 1, caractérisé par le fait que la quantite de matière filtrante extraite est réglée en continu par une variation de la circulation hydraulique.

3. Procédé selon l'une quelconque des revendications 1 et 2, caractérisé par le fait que la matière filtrante est mise en rotation par des organes mécaniques incorporés dans la région inférieure de l'espace cylindrique annulaire.

4. Dispositif de filtration continue de liquides, pour la mise en oeuvre du procédé selon l'une quelconque des revendications 1 à 3, comportant un récipient annulaire droit disposé verticalement, destiné à recevoir la couche de matière filtrante, et dont l'espace interne libre est obturé en haut et en bas, la paroi interne du cylindre, tout comme la paroi externe située autour du tronçon cylindrique, étant perméable aux liquides, dispositif caractérisé par le fait que la paroi externe (3) est entourée par au moins deux enveloppes annulaires qui, superposées axialement, délimitent chacune avec ladite paroi externe (3) une chambre annulaire (7; 8), la chambre inférieure (7) présentant, dans sa région inférieure, un raccord d'admission (9) du liquide à filtrer, la chambre supérieure (8) comportant un raccord de sortie (10) correspondant dans sa région supérieure, et par le fait que, dans sa partie inférieure, ledit récipient cylindrique annulaire comporte un couvercle en forme d'entonnoir (5) auquel est raccordé un tube d'extraction (6) dont part un conduit de réintroduction de la matière filtrante, laquelle, après avoir subi une préparation appropriée, est réintroduite dans une tête (1) dudit récipient surmontant le tronçon cylindrique annulaire (2) de ce dernier.

5. Dispositif selon la revendication 4, caractérisé par le fait que des organes incorporés (17), équipés d'ailettes radiales (19), sont montés dans la région inférieure de l'espace annulaire, en plusieurs endroits de sa périphérie.

6. Dispositif selon l'une quelconque des revendications 4 et 5, caractérisé par le fait que les zones obturantes inférieure et supérieure (12, 13) de l'espace interne (11) ont la forme de cônes dont les pointes sont orientées vers l'extérieur.

7. Dispositif selon l'une quelconque des revendications 4 à 6, caractérisé par le fait que le tube d'extraction (6) présente une longueur relativement grande par rapport à son diamètre et comporte à son extrémité inférieure un manchon axial (14) permettant l'arrivée de liquide destiné à engendrer le flux hydraulique réglable, ainsi qu'un raccord (15) monté latéralement et permettant l'extraction de la matière filtrante.

8. Dispositif selon la revendication 7, caractérisé par le fait que des nervures de guidage (16) orientées axialement, sont disposées à l'intérieur du tube d'extraction (6), de préférence dans sa région supérieure.

Fig. 1

Fig.2

19

18

17

Fig. 3